# EUROPEAN PATENT APPLICATION

(11) **EP 4 645 834 A1**
(43) Date of publication of application: **05.11.2025**
(21) Application number: 23914838.0
(22) Date of filing: 03.01.2023
(51) Int. Cl.: H04L 69/18, H04L 67/12, H04L 43/028, H04L 12/66

(54) **SIGNAL PROCESSING DEVICE FOR VEHICLE, AND VEHICLE HAVING SAME**

(71) Applicant: LG Electronics Inc., Yeongdeungpo-gu Seoul 07336 (KR)
(72) Inventor: KIM, Hansung, Seoul 06772 (KR); CHO, Chaeguk, Seoul 06772 (KR); PARK, Junsang, Seoul 06772 (KR); MOON, Junho, Seoul 06772 (KR); KIM, Taekyoung, Seoul 06772 (KR); KIM, Youngjae, Seoul 06772 (KR); CHO, Jaejin, Seoul 06772 (KR)
(74) Representative: Vossius & Partner Patentanwälte Rechtsanwälte mbB
(86) International application number: PCT/KR2023/000057
(87) International publication number: WO 2024/147372

(57) **Abstract**

The present disclosure relates to a signal processing device of a vehicle and a vehicle including the same. The signal processing device according to an embodiment of the present disclosure is configured to execute at least one daemon based on a first communication protocol and execute an agent configured to exchange a packet based on the first communication protocol with the daemon or exchange a packet with an external server, wherein the agent includes: a network manager configured to exchange a packet with a second agent in the external server; and a packet dispatcher configured to store a packet received from the network manager or to transmit the packet to the daemon. Accordingly, it is possible to provide a stable communication framework for communication with the external server.

## Description

### BACKGROUND

### 1. Technical Field

The present disclosure relates to a signal processing device of a vehicle and a vehicle including the same, and more particularly to a signal processing device of a vehicle capable of providing a stable communication framework for communication with an external server, and a vehicle including the signal processing device.

### 2. Description of the Related Art

A vehicle is a machine that allows a user to move in a desired direction. A typical example of the vehicle is an automobile.

Meanwhile, a signal processing device for vehicles is mounted in the vehicle for convenience of users who use the vehicle.

In the case in which the signal processing device in the vehicle uses a communication protocol different from an external server, the signal processing device in the vehicle is required to map a service inside the vehicle to external data by protocol converting.

In addition, there is a drawback in that a heterogeneous communication protocol is used such that it is impossible to support service discovery between the inside and outside of the vehicle, thereby making it difficult to dynamically extend services.

Further, the signal processing device in the vehicle uses a communication protocol different from an external server, and thus cannot use a code generated by a service interface.

### SUMMARY

It is an objective of the present disclosure to provide a signal processing device of a vehicle capable of providing a stable communication framework for communication with an external server, and a vehicle including the signal processing device.

Meanwhile, it is another objective of the present disclosure to provide a signal processing device of a vehicle capable of dynamically extending services by using the same communication protocol as an external server, and a vehicle including the signal processing device.

Meanwhile, it is yet another objective of the present disclosure to provide a signal processing device of a vehicle capable of using a code generated by a service interface, and a vehicle including the signal processing device.

In accordance with an aspect of the present disclosure, the above and other objectives can be accomplished by providing a signal processing device of a vehicle and a vehicle including the same, the signal processing device configured to execute at least one daemon based on a first communication protocol and execute an agent configured to exchange a packet based on the first communication protocol with the daemon or exchange a packet with an external server, wherein the agent includes: a network manager configured to exchange a packet with a second agent in the external server; and a packet dispatcher configured to store a packet received from the network manager or to transmit the packet to the daemon.

Meanwhile, the network manager in the agent can be configured to exchange a packet based on a second communication protocol with the second agent in the external server.

Meanwhile, based on endpoint information in a packet received from the daemon, the agent can be configured to store or transmit the packet to the external server.

Meanwhile, in response to there being no endpoint information in the packet received from the daemon, the agent can be configured to stop transmitting the packet.

Meanwhile, based on endpoint information in packets received from the second agent in the external server, the agent can be configured to store at least some of the packets or to transmit the at least some of the packets to the daemon.

Meanwhile, the agent can include: a packet filter configured to filter a packet received from the daemon; and a packet detector configured to detect a packet to transmit the external server, among packets from the packet filter, wherein the packet dispatcher can be configured to forward the packet, detected by the packet detector, to the network manager, and the network manager can be configured to transmit the packet to the second agent in the external server.

Meanwhile, the network manager can be configured to transmit a second packet based on a second communication protocol, including the packet from the packet dispatcher, to the second agent in the external server.

Meanwhile, the network manager in the agent can be configured to receive packet based on the second communication protocol from the second agent in the external server, wherein the packet dispatcher can be configured to process a header and payload in packet based on the second communication protocol, to extract the packet based on the first communication protocol, and to transmit the extracted packet based on the first communication protocol to the daemon.

Meanwhile, the agent can be configured to perform at least one of sniffing, forwarding, and filtering of the packet received from the daemon.

Meanwhile, the agent can be configured to receive the packet based on the first communication protocol, including information related to service and endpoint information, from a second signal processing device, and to store the received packet or to transmit the packet to a third signal processing device or the external server based on the endpoint information.

Meanwhile, the agent can be configured to receive the packet based on the first communication protocol, including fuel efficiency measurement information and endpoint information, from the second signal processing device, and to store the received packet or to transmit the fuel efficiency measurement information to another signal processing device or the external server requesting subscription, based on the endpoint information.

Meanwhile, the agent can be configured to receive the packet based on the first communication protocol, including vehicle location information or vehicle status information and endpoint information, from the second signal processing device, and to store the received packet or to transmit the vehicle location information or vehicle status information to another signal processing device or the external server requesting subscription, based on the endpoint information.

Meanwhile, the agent can be configured to receive the packet based on the first communication protocol, including information related to service and endpoint information, from each of a plurality of signal processing devices, and to store the received packet or to transmit the packet to another signal processing device or the external server requesting service subscription, based on the information related to service and the endpoint information.

Meanwhile, the agent can be configured to receive a packet based on a second communication protocol, including door lock information or door unlock information, from the external server, and to extract the packet based on the first communication protocol, including the door lock information or door unlock information, from packet based on the second communication protocol, and to store the extracted packet based on the first communication protocol or to transmit the packet to another signal processing device requesting service subscription.

Meanwhile, the first communication protocol can be Scalable service-Oriented MiddlewarE over IP (SOME/IP), and the second communication protocol can be TCP/IP.

In accordance with another aspect of the present disclosure, the above and other objectives can be accomplished by providing a signal processing device of a vehicle and a vehicle including the same, the signal processing device configured to execute at least one daemon based on a first communication protocol and execute an agent configured to exchange a packet based on the first communication protocol with the daemon or exchange a packet with an external server, wherein the agent is configured to exchange a packet based on a second communication protocol with a second agent in the external server, and to store or transmit the packet to the external server, based on endpoint information in the packet received from the daemon.

Meanwhile, in response to there being no endpoint information in the packet received from the daemon, the agent can be configured to stop transmitting the packet.

Meanwhile, based on endpoint information in packets received from the second agent in the external server, the agent can be configured to store at least some of the packets or to transmit the at least some of the packets to the daemon.

### EFFECTS OF THE DISCLOSURE

In a signal processing device of a vehicle and a vehicle including the same according to an embodiment of the present disclosure, the signal processing device is configured to execute at least one daemon based on a first communication protocol and execute an agent configured to exchange a packet based on the first communication protocol with the daemon or exchange a packet with an external server, wherein the agent includes: a network manager configured to exchange a packet with a second agent in the external server; and a packet dispatcher configured to store a packet received from the network manager or to transmit the packet to the daemon. Accordingly, it is possible to provide a stable communication framework for communication with the external server. In addition, it is possible to dynamically extend services by using the same communication protocol as the external server. Meanwhile, a code generated by a service interface can be used.

Meanwhile, the network manager in the agent can be configured to exchange a packet based on a second communication protocol with the second agent in the external server. Accordingly, it is possible to provide a stable communication framework for communication with the external server. In addition, it is possible to dynamically extend services by using the same communication protocol as the external server.

Meanwhile, based on endpoint information in a packet received from the daemon, the agent can be configured to store or transmit the packet to the external server. Accordingly, it is possible to provide a stable communication framework for communication with the external server.

Meanwhile, in response to there being no endpoint information in the packet received from the daemon, the agent can be configured to stop transmitting the packet. Accordingly, the packet received from the daemon cannot be transmitted to the outside.

Meanwhile, based on endpoint information in packets received from the second agent in the external server, the agent can be configured to store at least some of the packets or to transmit the at least some of the packets to the daemon. Accordingly, it is possible to provide a stable communication framework for communication with the external server.

Meanwhile, the agent can include: a packet filter configured to filter a packet received from the daemon; and a packet detector configured to detect a packet to transmit the external server, among packets from the packet filter, wherein the packet dispatcher can be configured to forward the packet, detected by the packet detector, to the network manager, and the network manager can be configured to transmit the packet to the second agent in the external server. Accordingly, it is possible to provide a stable communication framework for communication with the external server.

Meanwhile, the network manager can be configured to transmit a second packet based on a second communication protocol, including the packet from the packet dispatcher, to the second agent in the external server. Accordingly, it is possible to provide a stable communication framework for communication with the external server.

Meanwhile, the network manager in the agent can be configured to receive packet based on the second communication protocol from the second agent in the external server, wherein the packet dispatcher can be configured to process a header and payload in packet based on the second communication protocol, to extract the packet based on the first communication protocol, and to transmit the extracted packet based on the first communication protocol to the daemon. Accordingly, it is possible to provide a stable communication framework for communication with the external server.

Meanwhile, the agent can be configured to perform at least one of sniffing, forwarding, and filtering of the packet received from the daemon. Accordingly, the packet can be stably processed.

Meanwhile, the agent can be configured to receive the packet based on the first communication protocol, including information related to service and endpoint information, from a second signal processing device, and to store the received packet or to transmit the packet to a third signal processing device or the external server based on the endpoint information. Accordingly, it is possible to provide a stable communication framework for communication with the external server. In addition, it is possible to dynamically extend services by using the same communication protocol as the external server.

Meanwhile, the agent can be configured to receive the packet based on the first communication protocol, including fuel efficiency measurement information and endpoint information, from the second signal processing device, and to store the received packet or to transmit the fuel efficiency measurement information to another signal processing device or the external server requesting subscription, based on the endpoint information. Accordingly, it is possible to provide a stable communication framework for communication with the external server. In addition, it is possible to dynamically extend services by using the same communication protocol as the external server.

Meanwhile, the agent can be configured to receive the packet based on the first communication protocol, including vehicle location information or vehicle status information and endpoint information, from the second signal processing device, and to store the received packet or to transmit the vehicle location information or vehicle status information to another signal processing device or the external server requesting subscription, based on the endpoint information. Accordingly, it is possible to provide a stable communication framework for communication with the external server. In addition, it is possible to dynamically extend services by using the same communication protocol as the external server.

Meanwhile, the agent can be configured to receive the packet based on the first communication protocol, including information related to service and endpoint information, from each of a plurality of signal processing devices, and to store the received packet or to transmit the packet to another signal processing device or the external server requesting service subscription, based on the information related to service and the endpoint information. Accordingly, it is possible to provide a stable communication framework for communication with the external server. In addition, it is possible to dynamically extend services by using the same communication protocol as the external server.

Meanwhile, the agent can be configured to receive a packet based on a second communication protocol, including door lock information or door unlock information, from the external server, and to extract the packet based on the first communication protocol, including the door lock information or door unlock information, from packet based on the second communication protocol, and to store the extracted packet based on the first communication protocol or to transmit the packet to another signal processing device requesting service subscription. Accordingly, it is possible to provide a stable communication framework for communication with the external server. In addition, it is possible to dynamically extend services by using the same communication protocol as the external server.

Meanwhile, the first communication protocol can be Scalable service-Oriented MiddlewarE over IP (SOME/IP), and the second communication protocol can be TCP/IP. Accordingly, it is possible to provide a stable communication framework for communication with the external server.

In a signal processing device of a vehicle and a vehicle including the same according to another embodiment of the present disclosure, the signal processing device is configured to execute at least one daemon based on a first communication protocol and execute an agent configured to exchange a packet based on the first communication protocol with the daemon or exchange a packet with an external server, wherein the agent is configured to exchange a packet based on a second communication protocol with a second agent in the external server, and to store or transmit the packet to the external server, based on endpoint information in the packet received from the daemon. Accordingly, it is possible to provide a stable communication framework for communication with the external server. In addition, it is possible to dynamically extend services by using the same communication protocol as the external server.

Meanwhile, in response to there being no endpoint information in the packet received from the daemon, the agent can be configured to stop transmitting the packet. Accordingly, the packet received from the daemon cannot be transmitted to the outside.

Meanwhile, based on endpoint information in packets received from the second agent in the external server, the agent can be configured to store at least some of the packets or to transmit the at least some of the packets to the daemon. Accordingly, it is possible to provide a stable communication framework for communication with the external server.

### BRIEF DESCRIPTION OF THE DRAWINGS

FIG. 1 is a view showing an example of the exterior and interior of a vehicle;
FIGS. 2A to 2C are diagrams illustrating various architectures of a vehicle communication gateway according to an embodiment of the present disclosure;
FIG. 3 is an internal block diagram illustrating the signal processing device of FIG. 2A;
FIG. 4A is a diagram illustrating an example of an arrangement of a vehicle display apparatus in a vehicle according to an embodiment of the present disclosure;
FIG. 4B is a diagram illustrating another example of an arrangement of a vehicle display apparatus in a vehicle according to an embodiment of the present disclosure;
FIG. 5 is an internal block diagram illustrating the vehicle display apparatus of FIG. 4B;
FIG. 6 is an internal block diagram illustrating an example of a vehicle communication device;
FIG. 7 is an internal block diagram illustrating another example of a vehicle communication device;
FIG. 8 is an exemplary internal block diagram of a signal processing system for a vehicle associated with the present disclosure;
FIG. 9 is an exemplary internal block diagram of a signal processing system for a vehicle according to an embodiment of the present disclosure; and
FIGS. 10 to 14 are diagrams referred to in the description of FIG. 9.

### DETAILED DESCRIPTION

Hereinafter, the present disclosure will be described in detail with reference to the accompanying drawings.

With respect to constituent elements used in the following description, suffixes "module" and "unit" are given only in consideration of ease in preparation of the specification, and do not have or serve different meanings. Accordingly, the suffixes "module" and "unit" can be used interchangeably.

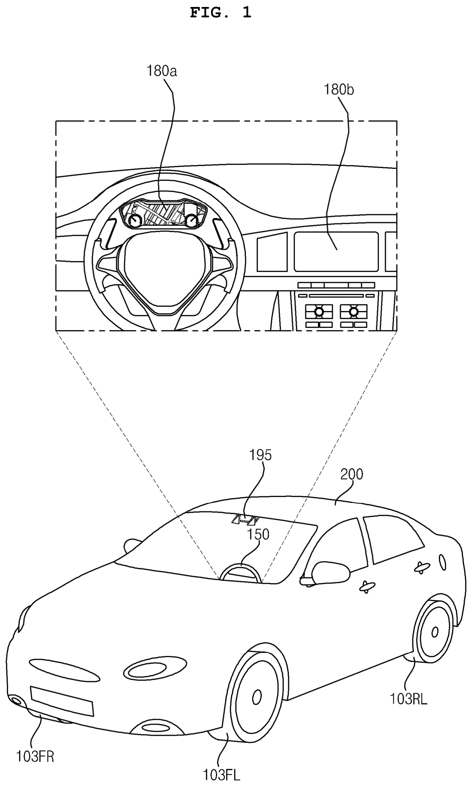

FIG. 1 is a view showing an example of the exterior and interior of a vehicle.

Referring to the figure, the vehicle 200 is moved by a plurality of wheels 103FR, 103FL, 103RL,... rotated by a power source and a steering wheel 150 configured to adjust an advancing direction of the vehicle 200.

Meanwhile, the vehicle 200 can be provided with a camera 195 configured to acquire an image of the front of the vehicle.

Meanwhile, the vehicle 200 can be further provided therein with a plurality of displays 180a and 180b configured to display images and information.

In FIG. 1, a cluster display 180a and an audio video navigation (AVN) display 180b are illustrated as the plurality of displays 180a and 180b. In addition, a head up display (HUD) can also be used.

Meanwhile, the audio video navigation (AVN) display 180b can also be called a center information display.

Meanwhile, the vehicle 200 described in this specification can be a concept including all of a vehicle having an engine as a power source, a hybrid vehicle having an engine and an electric motor as a power source, and an electric vehicle having an electric motor as a power source.

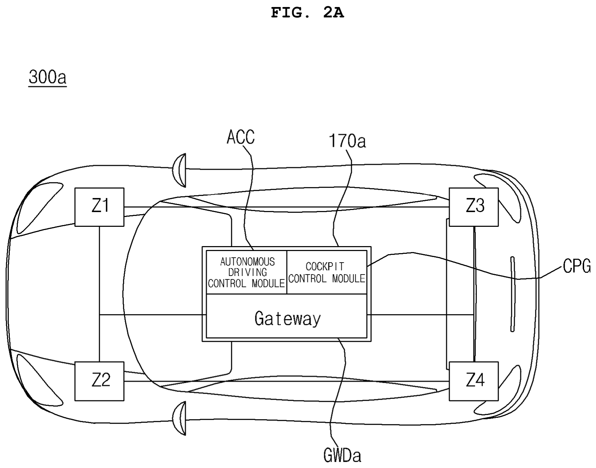

FIGS. 2A to 2C are diagrams illustrating various architectures of a vehicle communication gateway according to an embodiment of the present disclosure.

First, FIG. 2A is a diagram illustrating a first architecture of a vehicle communication gateway according to an embodiment of the present disclosure.

Referring to the drawing, the first architecture 300a can correspond to a zone-based architecture.

Accordingly, in-vehicle sensor devices and processors can be mounted in each of a plurality of zones Z1 to Z4, and a signal processing device 170a including a vehicle communication gateway GWDa can be disposed at the center of the plurality of zones Z1 to Z4.

Meanwhile, the signal processing device 170a can further include an autonomous driving control module ACC, a cockpit control module CPG, etc., in addition to the vehicle communication gateway GWDa.

The vehicle communication gateway GWDa in the signal processing device 170a can be a High Performance Computing (HPC) gateway.

That is, as an integrated HPC gateway, the signal processing device 170a of FIG. 2A can be configured to exchange data with an external communication module (not shown) or processors (not shown) in the plurality of zones Z1 to Z4.

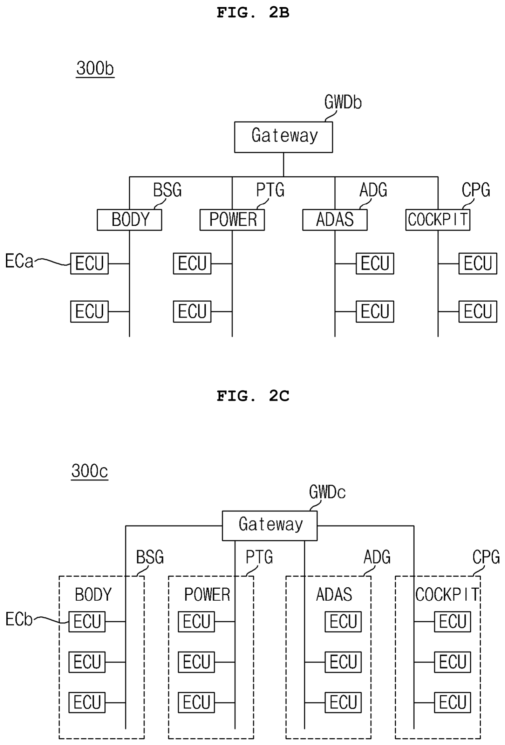

FIG. 2B is a diagram illustrating a second architecture of a vehicle communication gateway according to an embodiment of the present disclosure.

Referring to the drawing, a second architecture 300b can correspond to a domain integrated architecture.

Accordingly, a body chassis control module (BSG), a power control module (PTG), an ADAS control module (ADG), and a cockpit control module (CPG) are connected in parallel to a gateway GWDb, and a plurality of processors ECU can be electrically connected to the respective modules BSG, PTG, ADG, and CPG.

Meanwhile, the respective processors ECU can be connected to the gateway GWDb while being integrated therein.

Meanwhile, the signal processing device 170 including the gateway GWDb of FIG. 2B can function as a domain integrated signal processing device.

FIG. 2C is a diagram illustrating a third architecture of a vehicle communication gateway according to an embodiment of the present disclosure.

Referring to the drawing, a third architecture 300c can correspond to a distributed architecture.

Accordingly, the body chassis control module (BSG), the power control module (PTG), the ADAS control module (ADG), and the cockpit control module (CPG) are connected in parallel to a gateway GWDc, and particularly a plurality of processors ECU in the respective control modules can be electrically connected in parallel to the gateway GWDc.

In comparison with FIG. 2B, the third architecture has a difference in that the respective processors ECU are connected directly to the gateway GWDc without being connected to another module.

Meanwhile, the signal processing device 170 including the gateway GWDc of FIG. 2C functions as a distributed signal processing device.

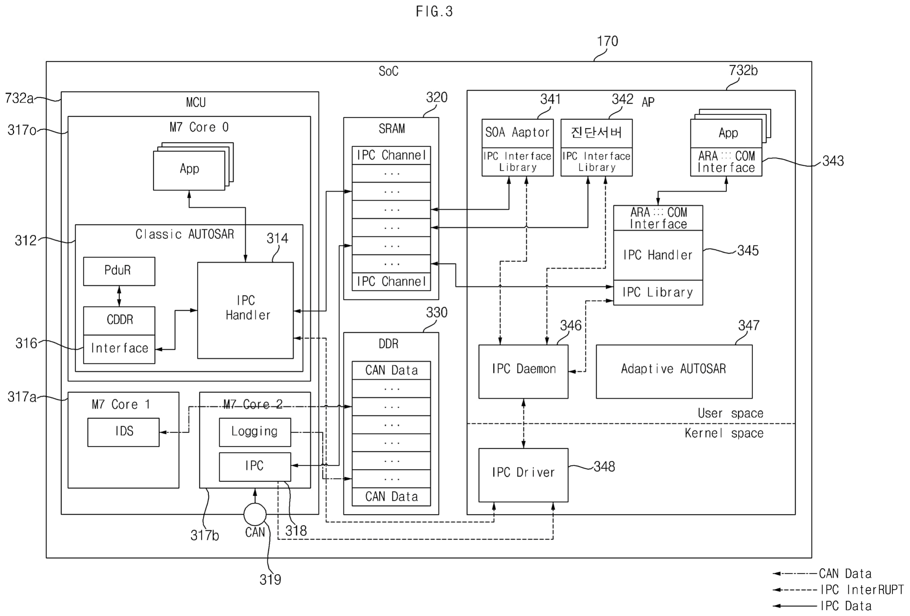

FIG. 3 is an internal block diagram illustrating the signal processing device of FIG. 2A.

Referring to the drawing, the signal processing device 170 according to an embodiment of the present disclosure includes: a first processor 732a, which based on a first communication scheme, is configured to receive a first message including a sensor signal in a vehicle and to perform signal processing on the received first message; and a second processor 732b, which based a second communication scheme, is configured to receive a second message including a communication message received from an external source and to perform signal processing on the received second message.

In this case, the second communication scheme can have a faster communication speed or a wider bandwidth than the first communication scheme.

For example, the second communication scheme can be Ethernet communication, and the first communication scheme can be CAN communication. Accordingly, the first message can be a CAN message, and the second message can be an Ethernet message.

Meanwhile, the signal processing device 170 according to an embodiment of the present disclosure further includes: a first memory 320 having an IPC channel; and a second memory 330 storing sensor data including vehicle speed data.

For example, the first memory 320 can be a Static RAM (SRAM), and the second memory 330 can be a DDR memory. Particularly, the second memory 330 can be a Double data rate synchronous dynamic random access memory (DDR SDRAM).

Meanwhile, the signal processing device 170 according to an embodiment of the present disclosure includes a shared memory 508 which operates for transmitting the first message or the second message between the first processor 732a and the second processor 732b.

As described above, by performing inter-processor communication using the shared memory 508 during the communication between the first processor 732a and the second processor 732b, latency can be reduced and high-speed data transmission can be performed during inter-processor communication.

Meanwhile, it is desired that the shared memory 508 is provided in the first memory 320. Accordingly, latency can be reduced and high-speed data transmission can be performed during inter-processor communication.

Meanwhile, the first processor 732a can include a plurality of processor cores 317o, 317a, and 317b disposed therein.

Meanwhile, the first processor 732a can further include an interface 319 for receiving the CAN message from external vehicle sensors.

For example, a first processor core 317o included in the first processor 732a can be configured to execute a plurality of applications or can be configured to execute a first AUTomotive Open System Architecture (AUTOSAR) 312.

Particularly, by executing a second AUTOSAR 312, the first processor core 317o can be configured to execute an inter-processor communication (IPC) handler 314.

Meanwhile, the IPC handler 314 can be configured to exchange data with the first memory 320 or can be configured to exchange IPC data with an application running on the core 317o.

Meanwhile, the IPC handler 314 can be configured to exchange an interrupt signal with an IPC driver 348 included in the second processor 732b.

Meanwhile, a second processor core 317a included in the first processor 732a can be configured to execute IDS and can be configured to receive CAN data from the second memory 330.

Meanwhile, a third processor core 317b included in the first processor 732a can be configured to execute Logging, and can be configured to store the CAN data, received through the interface 319, in the second memory 330.

Meanwhile, the third processor core 317b included in the first processor 732a can be configured to execute an IPC module 318 to exchange IPC data with the first memory 320.

Meanwhile, the third processor core 317b included in the first processor 732a can be configured to transmit an interrupt signal to the IPC driver 348 in the second processor 732b.

The first memory 320 can be configured to exchange the IPC data with the IPC handler 314 or the IPC module 318.

Meanwhile, the second processor 732b can be configured to execute an application 343, the IPC handler 345, an IPC daemon 346, the IPC driver 348, and the like.

Meanwhile, the second processor 732b can further execute a service oriented architecture (SOA) adapter 341, a diagnosis server 342, and the second AUTOSAR 347.

The second AUTOSAR 347 can be an adaptive AUTOSAR, and the first AUTOSAR 312 can be a classic AUTOSAR.

The IPC daemon 346 can be configured to exchange an interrupt signal with the SOA adapter 341, the diagnosis server 342, the IPC handler 345, the IPC driver 348, and the like.

Meanwhile, the first memory 320 can be configured to exchange IPC data with the SOA adapter 341, the diagnosis server 342, the IPC handler 345, and the like.

Meanwhile, the IPC data described with reference to FIG. 3 can be the CAN message or Ethernet message.

Meanwhile, the IPC handler 345 can function as a service provider providing data such as diagnosis, firmware, upgrade, system information, etc., based on the second AUTOSAR 347.

Meanwhile, although not illustrated in FIG. 3, the first processor 732a implements a message router (not shown), and the message router can convert a frame of the first message, such as the CAN message, into a frame format of the second message, such as the Ethernet message, and can be configured to transmit the converted message to the second processor 732b.

Meanwhile, although not illustrated in FIG. 3, the first processor 732a can further implement a CAN driver (not shown) and a CAN interface (not shown).

For example, the CAN interface (not shown) can be implemented by a total of 16 channels, with eight channels of each of a fourth processor core (not shown) and a fifth processor core (not shown) in the first processor 732a.

In this case, a first CAN interface (not shown) implemented on the fourth processor core (not shown) can correspond to a first queue (PTb) during inter-processor communication, and a second CAN interface (not shown) implemented on the fifth processor core (not shown) can correspond to a second queue (PTb), having a higher priority than the first queue (PTb), during inter-processor communication.

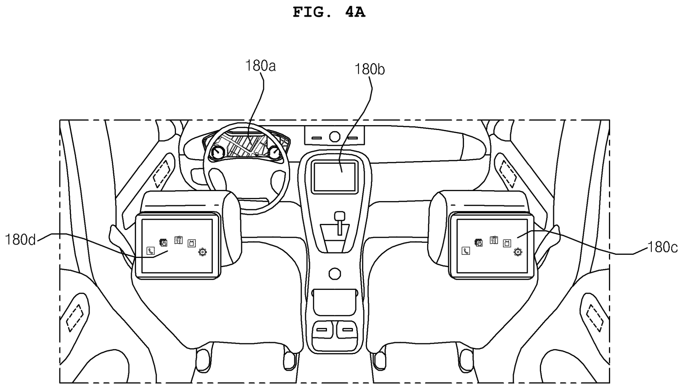

FIG. 4A is a diagram illustrating an example of an arrangement of a vehicle display apparatus in a vehicle according to an embodiment of the present disclosure.

Referring to the figure, a cluster display 180a, an audio video navigation (AVN) display 180b, rear seat entertainment displays 180c and 180d, and a rear-view mirror display (not shown) can be mounted in the vehicle.

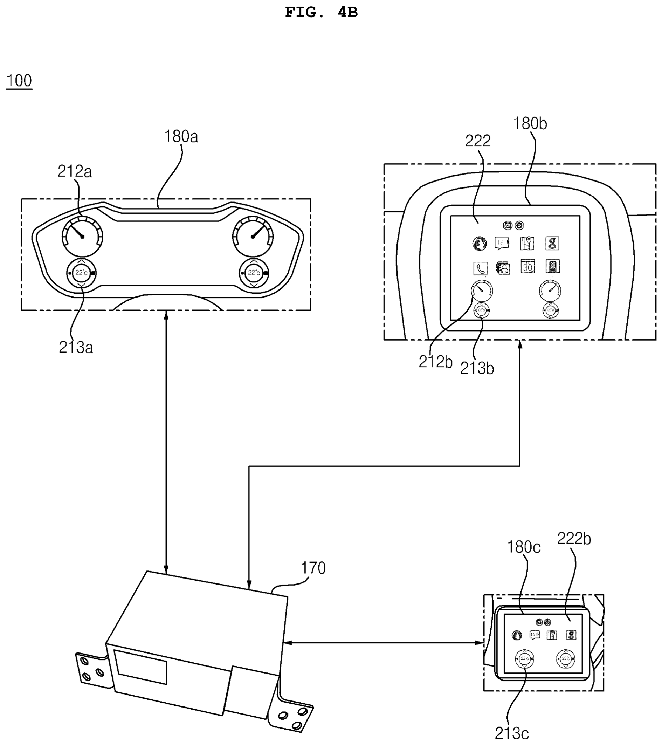

FIG. 4B is a diagram illustrating another example of an arrangement of a vehicle display apparatus in a vehicle according to an embodiment of the present disclosure.

The vehicle display apparatus 100 according to the embodiment of the present disclosure can include a plurality of displays 180a and 180b and a signal processing device 170 configured to perform signal processing in order to display images and information on the plurality of displays 180a and 180b.

The first display 180a, which is one of the plurality of displays 180a and 180b, can be a cluster display 180a configured to display a driving state and operation information, and the second display 180b can be an audio video navigation (AVN) display 180b configured to display vehicle driving information, a navigation map, various kinds of entertainment information, or an image.

The signal processing device 170 can have a processor 175 provided therein, and first to third virtual machines (not shown) can be executed by a hypervisor 505 in the processor 175.

The second virtual machine (not shown) can be operated for the first display 180a, and the third virtual machine (not shown) can be operated for the second display 180b.

Meanwhile, the first virtual machine (not shown) in the processor 175 can be configured to set a shared memory 508 based on the hypervisor 505 for transmission of the same data to the second virtual machine (not shown) and the third virtual machine (not shown). Consequently, the first display 180a and the second display 180b in the vehicle can display the same information or the same images in a synchronized state.

Meanwhile, the first virtual machine (not shown) in the processor 175 shares at least some of data with the second virtual machine (not shown) and the third virtual machine (not shown) for divided processing of data. Consequently, the plurality of virtual machines for the plurality of displays in the vehicle can divide and process data.

Meanwhile, the first virtual machine (not shown) in the processor 175 can be configured to receive and process wheel speed sensor data of the vehicle, and can be configured to transmit the processed wheel speed sensor data to at least one of the second virtual machine (not shown) or the third virtual machine (not shown). Consequently, at least one virtual machine can share the wheel speed sensor data of the vehicle.

Meanwhile, the vehicle display apparatus 100 according to the embodiment of the present disclosure can further include a rear seat entertainment (RSE) display 180c configured to display driving state information, simple navigation information, various kinds of entertainment information, or an image.

The signal processing device 170 can further execute a fourth virtual machine (not shown), in addition to the first to third virtual machines (not shown), on the hypervisor 505 in the processor 175 to control the RSE display 180c.

Consequently, it is possible to control various displays 180a to 180c using a single signal processing device 170.

Meanwhile, some of the plurality of displays 180a to 180c can be operated based on a Linux Operating System (OS), and others can be operated based on a Web Operating System (OS).

The signal processing device 170 according to the embodiment of the present disclosure can be configured to display the same information or the same images in a synchronized state on the displays 180a to 180c to be operated under various operating systems.

Meanwhile, FIG. 4B illustrates that a vehicle speed indicator 212a and an in-vehicle temperature indicator 213a are displayed on the first display 180a, a home screen 222 including a plurality of applications, a vehicle speed indicator 212b, and an in-vehicle temperature indicator 213b is displayed on the second display 180b, and a second home screen 222b including a plurality of applications and an in-vehicle temperature indicator 213c is displayed on the third display 180c.

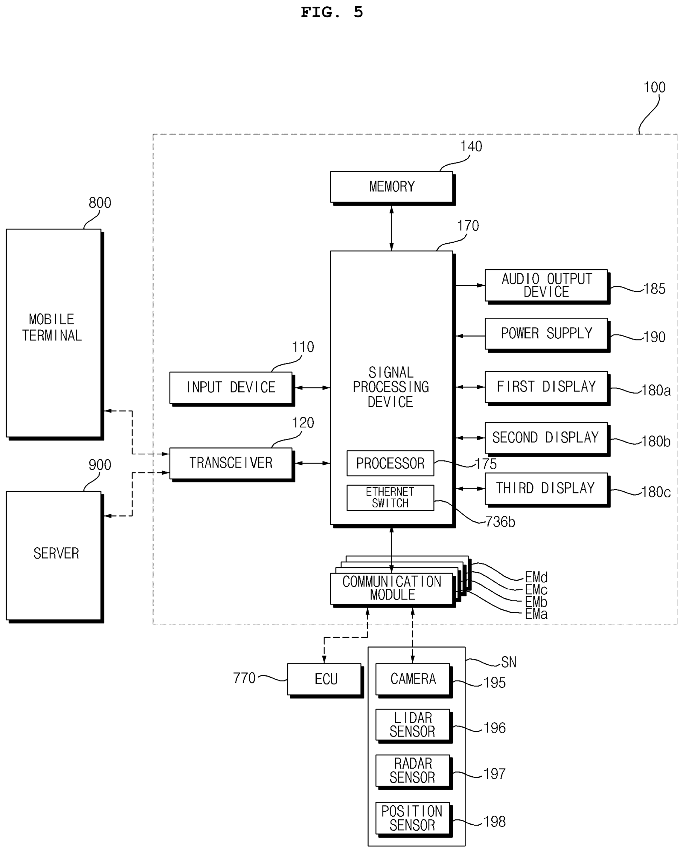

FIG. 5 is an internal block diagram illustrating the vehicle display apparatus of FIG. 4B according to the embodiment of the present disclosure.

Referring to the figure, the vehicle display apparatus 100 according to the embodiment of the present disclosure can include an input device 110, a transceiver 120 for communication with an external device, a plurality of communication modules EMa to EMd for internal communication, a memory 140, a signal processing device 170, a plurality of displays 180a to 180c, an audio output device 185, and a power supply 190.

The plurality of communication modules EMa to EMd can be disposed in a plurality of zones Z1 to Z4, respectively, in FIG. 2A.

Meanwhile, the signal processing device 170 can be provided therein with an Ethernet switch 736b for data communication with the respective communication modules EM1 to EM4.

The respective communication modules EM1 to EM4 can perform data communication with a plurality of sensor devices SN or an ECU 770.

Meanwhile, each of the plurality of sensor devices SN can include a camera 195, a lidar sensor 196, a radar sensor 197, or a position sensor 198.

The input device 110 can include a physical button or pad for button input or touch input.

Meanwhile, the input device 110 can include a microphone (not shown) for user voice input.

The transceiver 120 can wirelessly exchange data with a mobile terminal 800 or a server 900.

In particular, the transceiver 120 can wirelessly exchange data with a mobile terminal of a vehicle driver. Any of various data communication schemes, such as Bluetooth, Wi-Fi, WIFI Direct, and APIX, can be used as a wireless data communication scheme.

The transceiver 120 can be configured to receive weather information and road traffic situation information, such as transport protocol expert group (TPEG) information, from the mobile terminal 800 or the server 900. To this end, the transceiver 120 can include a mobile communication module (not shown).

The plurality of communication modules EM1 to EM4 can be configured to receive sensor information from an electronic control unit (ECU) 770 or a sensor device SN, and can be configured to transmit the received information to the signal processing device 170.

Here, the sensor information can include at least one of vehicle direction information, vehicle location information (global positioning system (GPS) information), vehicle angle information, vehicle velocity information, vehicle acceleration information, vehicle inclination information, vehicle forward/backward movement information, battery information, fuel information, tire information, vehicle lamp information, in-vehicle temperature information, or in-vehicle humidity information.

The sensor information can be acquired from a heading sensor, a yaw sensor, a gyro sensor, a position sensor, a vehicle forward/backward movement sensor, a wheel sensor, a vehicle velocity sensor, a car body inclination sensor, a battery sensor, a fuel sensor, a tire sensor, a steering-wheel-rotation-based steering sensor, an in-vehicle temperature sensor, or an in-vehicle humidity sensor.

Meanwhile, the position module can include a GPS module configured to receive GPS information or a position sensor 198.

Meanwhile, at least one of the plurality of communication modules EM1 to EM4 can be configured to transmit position information data sensed by the GPS module or the position sensor 198 to the signal processing device 170.

Meanwhile, at least one of the plurality of communication modules EM1 to EM4 can be configured to receive front-of-vehicle image data, side-of-vehicle image data, rearof-vehicle image data, and obstacle-around-vehicle distance information from the camera 195, the lidar sensor 196, or the radar sensor 197, and can be configured to transmit the received information to the signal processing device 170.

The memory 140 can be configured to store various data necessary for overall operation of the vehicle display apparatus 100, such as programs for processing or control of the signal processing device 170.

For example, the memory 140 can be configured to store data about the hypervisor and first to third virtual machines executed by the hypervisor in the processor 175.

The audio output device 185 can convert an electrical signal from the signal processing device 170 into an audio signal, and can be configured to output the audio signal. To this end, the audio output device 185 can include a speaker.

The power supply 190 can supply power necessary to operate components under control of the signal processing device 170. In particular, the power supply 190 can be configured to receive power from a battery in the vehicle.

The signal processing device 170 can control overall operation of each device in the vehicle display apparatus 100.

For example, the signal processing device 170 can include a processor 175 configured to perform signal processing for the vehicle displays 180a and 180b.

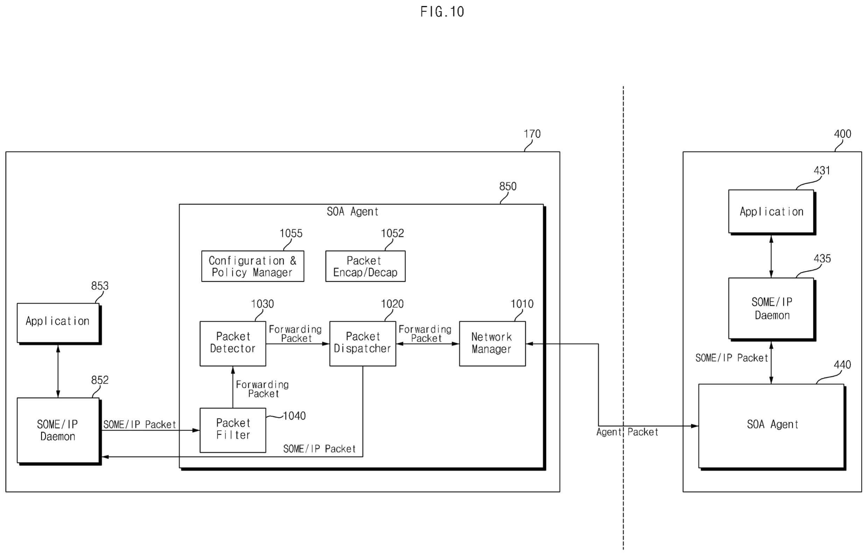

The processor 175 can be configured to execute the first to third virtual machines (not shown) on the hypervisor 505 (see FIG. 10) in the processor 175.

Among the first to third virtual machines (not shown) (see FIG. 10), the first virtual machine (not shown) can be called a server virtual machine, and the second and third virtual machines (not shown) and (not shown) can be called guest virtual machines.

For example, the first virtual machine (not shown) in the processor 175 can be configured to receive sensor data from the plurality of sensor devices, such as vehicle sensor data, position information data, camera image data, audio data, or touch input data, and can process and output the received sensor data.

As described above, the first virtual machine (not shown) can process most of the data, whereby 1:N data sharing can be achieved.

In another example, the first virtual machine (not shown) can directly receive and process CAN data, Ethernet data, audio data, radio data, USB data, and wireless communication data for the second and third virtual machines (not shown).

Further, the first virtual machine (not shown) can be configured to transmit the processed data to the second and third virtual machines 530 and 540.

Accordingly, only the first virtual machine (not shown), among the first to third virtual machines (not shown), can be configured to receive sensor data from the plurality of sensor devices, communication data, or external input data, and can perform signal processing, whereby load in signal processing by the other virtual machines can be reduced and 1:N data communication can be achieved, and therefore synchronization at the time of data sharing can be achieved.

Meanwhile, the first virtual machine (not shown) can be configured to write data in the shared memory 508, whereby the second virtual machine (not shown) and the third virtual machine (not shown) share the same data.

For example, the first virtual machine (not shown) can be configured to write vehicle sensor data, the position information data, the camera image data, or the touch input data in the shared memory 508, whereby the second virtual machine (not shown) and the third virtual machine (not shown) share the same data. Consequently, 1:N data sharing can be achieved.

Eventually, the first virtual machine (not shown) can process most of the data, whereby 1:N data sharing can be achieved.

Meanwhile, the first virtual machine (not shown) in the processor 175 can be configured to set the shared memory 508 based on the hypervisor 505 in order to transmit the same data to the second virtual machine (not shown) and the third virtual machine (not shown).

Meanwhile, the signal processing device 170 can process various signals, such as an audio signal, an image signal, and a data signal. To this end, the signal processing device 170 can be implemented in the form of a system on chip (SOC).

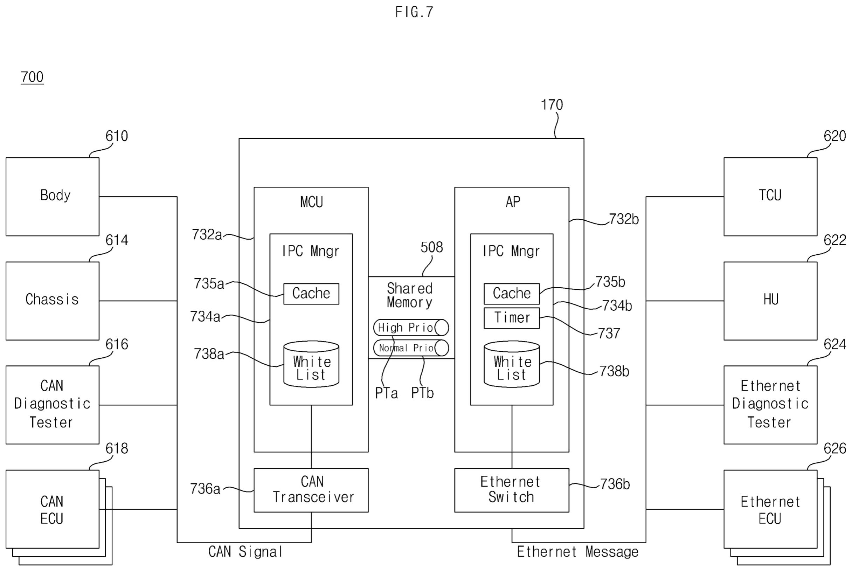

Meanwhile, the signal processing device 170 included in the display apparatus 100 of FIG. 5 can be the same as the signal processing device 170 of a vehicle communication device 700 of FIG. 7 and the like.

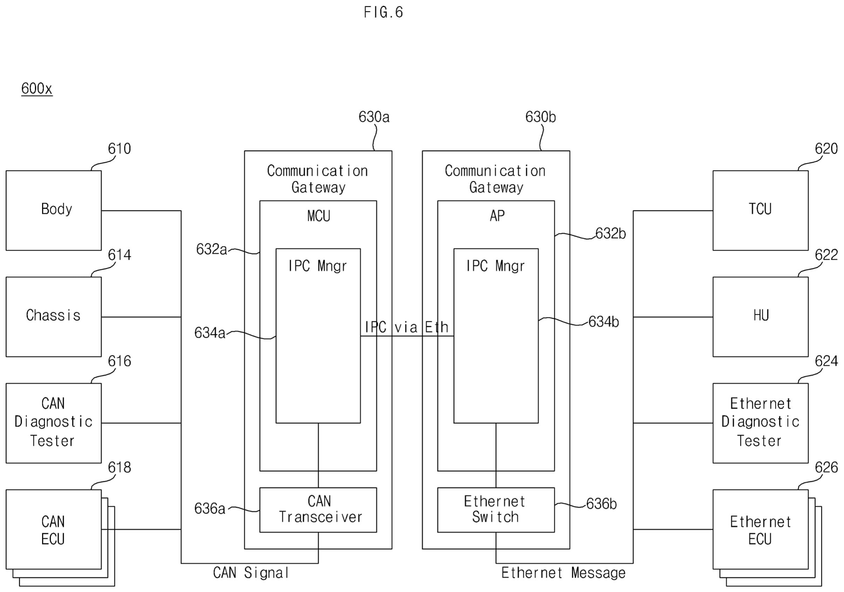

FIG. 6 is an internal block diagram illustrating an example of a vehicle communication device.

Referring to the drawing, a vehicle communication device 600x associated with the present disclosure can include a first communication gateway 630a and a second communication gateway 630b.

The first communication gateway 630a can include a body module 610, a chassis module 614, a CAN diagnostic tester 616, a CAN transceiver 636a for exchanging a CAN signal by CAN communication with at least one CAN ECU 618 and the like, and a first processor 632a for performing signal processing on the CAN signal received from the CAN transceiver 636a.

Meanwhile, the first processor 632a can include an IPC manager 634a for inter-processor communication with a second processor 632b in the second communication gateway 630b.

The second communication gateway 630b can include a telematics control module 620, a head module 622, an Ethernet diagnostic tester 624, an Ethernet switch 636b for exchanging an Ethernet message by Ethernet communication with at least one Ethernet ECU 626, and a second processor 632b for performing signal processing on the Ethernet message received from the Ethernet switch 636b.

Meanwhile, the second processor 632b can include an IPC manager 634b for inter-processor communication with the first processor 632a in the first communication gateway 630a.

Meanwhile, the IPC manager 634a in the first processor 632a and the IPC manager 643b in the second processor 632b can perform inter-processor communication based on the Ethernet communication.

While the inter-processor communication is suitable for high-speed transmission of large data using a high bandwidth based on Ethernet, the communication method has a drawback in that latency occurs in communication between a protocol stack and a Physical Layer (PHY).

Accordingly, the present disclosure provides a method of reducing latency and performing high-speed data transmission during inter-processor communication, which will be described below with reference to FIG. 7 and the following figures.

FIG. 7 is an internal block diagram illustrating another example of a vehicle communication device.

Referring to the drawing, the vehicle communication device 700 according to an embodiment can include: a first processor 732a which, based on a first communication scheme with a first communication gateway 730a and a second communication gateway 730b, is configured to receive a first message including an in-vehicle sensor signal and to perform signal processing on the received first message; a second processor 732b which, based on a second communication scheme, is configured to receive a second message including a communication message received from an external source and to perform signal processing of the received second message; and a shared memory 508 configured to operate to transmit the first message or the second message between the first processor 732a and the second processor 732b.

In comparison with the communication device 600x of FIG. 6, by using the shared memory 508 for inter-processor communication (IPC) between the first processor 732a and the second processor 732b, it is possible to reduce latency and to perform high-speed data transmission during the inter-processor communication.

In addition, in comparison with the communication device 600x of FIG. 6, by providing the first processor 732a, the second processor 732b, and the shared memory 508 in one signal processing device 170 implemented as a single chip, it is possible to reduce latency and to perform high-speed data transmission during the inter-processor communication.

Meanwhile, it is preferred that the second communication scheme has a faster communication speed or a wider bandwidth than the first communication scheme.

For example, the second communication scheme can be Ethernet communication, and the first communication scheme can be CAN communication. Accordingly, the first message can be a CAN message, and the second message can be an Ethernet message.

Meanwhile, the signal processing device 170 and the vehicle communication device 700 including the same according to an embodiment of the present disclosure can further include: a transceiver 736a which, based on the first communication scheme, is configured to receive a first message including an in-vehicle sensor signal and to transmit the first message to the first processor 732a; and the switch 736b which, based on the second communication scheme, is configured to receive a second message including a communication message received from an external source and to transmit the second message to the second processor 732b, such that the first and second messages can be transmitted stably to the first processor 732a and the second processor 732b.

The first processor 732a or the transceiver 736a can be configured to exchange a CAN signal by CAN communication with the body module 610, the chassis module 614, the CAN diagnostic tester 616, at least one CAN ECU 618, and the like.

Meanwhile, the first processor 732a can include a first manager 734a for inter-processor communication (IPC) with the second processor 732b. The first manager 734a can be referred to as an IPC manager.

Meanwhile, the first manager 734a can include a first cache 735a.

Meanwhile, the second processor 732b or the switch 736b can be configured to exchange an Ethernet message by Ethernet communication with the telematics control module 620, the head module 622, the Ethernet diagnostic tester 624, at least one Ethernet ECU 626, and the like. The switch 736b can be referred to as an Ethernet switch.

Meanwhile, the second processor 732b can include a second manager 734b for inter-processor communication (IPC) with the first processor 732a. The second manager 734a can be referred to as an IPC manager.

Meanwhile, the second manager 734b can include the second manager 734b including a second cache 735b and a timer 737.

Meanwhile, the second processor 723b can be configured to receive a request for periodic subscription to the first message from the Ethernet processor or the Ethernet ECU 626.

Accordingly, the second processor 732b can be configured to transmit the request for periodic subscription to the first message to the first processor 732a.

Particularly, the second processor 732b can be configured to transmit the subscription request through the inter-processor communication (IPC). Accordingly, the inter-processor communication can be performed.

Meanwhile, the first processor 732a can periodically receive CAN data from the at least one CAN ECU 618 and the like.

For example, the first processor 732a periodically receives the first message, predefined in a CAN database (DB), from the at least one CAN ECU 618 and the like.

For example, the periodic first message, which is sensor information, can include vehicle speed information, position information, or the like.

In another example, the periodic first message can include at least one of vehicle direction information, vehicle location information (GPS information), vehicle angle information, vehicle acceleration information, vehicle tilt information, forward/backward movement information, battery information, fuel information, tire information, vehicle lamp information, in-vehicle temperature information, or in-vehicle humidity information.

Meanwhile, the first processor 732a can be configured to select a first message, for which the subscription is requested, among the periodically received CAN data or first messages, and can be configured to transmit the first message, for which the subscription is requested, to the second processor 732b.

Meanwhile, the first processor 732a can separately process a first message, for which the subscription is not requested, among the periodically received CAN data or first messages, according to an internal operation without transmitting the message to the second processor 732b.

Specifically, in response to receiving the first message for which the subscription is requested, the first processor 732a can be configured to store the first message in the first cache 735a or can manage the first message. In response to receiving the first message, the first processor 732a can be configured to compare the first message with a value stored in the first cache 735a, and if a difference therebetween is greater than or equal to a predetermined value, the first processor 732a can be configured to transmit the first message to the second processor 732b through the inter-processor communication.

Meanwhile, in response to receiving the first message for which the subscription is requested, the first processor 732a can be configured to store the first message in the first cache 735a or can manage the first message. In response to receiving the first message, the first processor 732a can be configured to compare the first message with a value stored in the first cache 735a, and if a difference therebetween is greater than or equal to a predetermined value, the first processor 732a can be configured to transmit the first message to the second processor 732b through the inter-processor communication using the shared memory 508.

For example, in response to receiving the first message, the first processor 732a can be configured to compare the message with a value stored in the first cache 735a, and if the two are not the same, the first processor 732a can be configured to transmit the first message to the second processor 732b through the inter-processor communication using the shared memory 508.

In another example, in response to receiving the first message, the first processor 732a can be configured to compare the message with the value stored in the first cache 735a, and if the two are the same, the first processor 732a cannot transmit the first message to the second processor 732b.

Accordingly, by minimizing cache occupancy or buffer occupancy of the same data, it is possible to reduce latency and to perform high-speed data transmission during inter-processor communication.

Meanwhile, upon first receiving the first message, the second processor 732b can be configured to store the first message in the second cache 735b, and upon subsequently receiving the first message, the second processor 732b can update the second cache 735b. Accordingly, it is possible to reduce latency and to perform high-speed data transmission during inter-processor communication.

Meanwhile, in response to receiving the first message, the second processor 732b can be configured to generate a thread of the timer 737, and each time the thread terminates, the second processor 732b can be configured to transmit a value in the second cache 735b to the Ethernet processor or the Ethernet ECU 626. Accordingly, it is possible to reduce latency and to perform high-speed data transmission during inter-processor communication.

Meanwhile, during a period in which the inter-processor communication is not performed such that the first message is not received, the second processor 732b can be configured to transmit a value in the second cache 735b to the Ethernet processor or the Ethernet ECU 626.

That is, if a value of the subscribed first message is constant during the period, the cache value stored in the second processor 732b can be transmitted to the Ethernet processor 626 without the inter-processor communication.

Accordingly, it is possible to minimize the usage of the IPC buffer in the shared memory 508 which operates in FIFO mode. In addition, by maintaining the usage of the IPC buffer to a minimum, data including the first message, the second message, or the like can be transmitted rapidly through the inter-processor communication.

Meanwhile, during a period in which the inter-processor communication is performed such that the first message is received, the second processor 732b can be configured to transmit a value in the updated second cache 735b to the Ethernet processor or the Ethernet ECU 626. Accordingly, it is possible to reduce latency and to perform high-speed data transmission during inter-processor communication.

Meanwhile, during the inter-processor communication, the shared memory 508 can be configured to transmit data between the first processor 732a and the second processor 732b through a first queue PTb and a second queue PTa having a higher priority than the first queue PTb.

Particularly, even when the number of events for the inter-processor communication increases, the shared memory 508 can be configured to transmit only the data, corresponding to events allocated for the second queue PTa, through the second queue PTa. Accordingly, real-time transmission of a high priority event can be ensured during the inter-processor communication.

For example, the first PTb can be a normal priority queue, and the second queue PTa can be a high priority queue.

Specifically, the shared memory 508 can be configured to transmit most of the data through the first queue PTb during the inter-processor communication.

However, the share memory 508 can be configured to transmit only time sensitive-critical data without delay through the second queue PTa which is a higher priority queue than the first queue PTb.

For example, the time sensitive-critical data can be speed data, position information data, or the like.

That is, the shared memory 508 can be configured to transmit the speed data or position information data between the first processor 732a or the second processor 732b through the second queue PTa. Accordingly, real-time transmission of the speed data or the position information data having a high priority can be ensured during the inter-processor communication.

Meanwhile, the first processor 732a or the second processor 732b can manage a list of applications capable of using the second queue PTa.

For example, the second processor 732b can include an application for displaying speed information, as an application capable of using the second queue PTa, in a second list 738b and can manage the list.

Meanwhile, for real-time transmission through the second queue PTa, a minimum operation is preferred so that there can be no redundant scenarios or applications.

As described above, by transmitting the time sensitive-critical data in real time using the second queue PTa, real-time transmission of a high priority event can be ensured during the inter-processor communication.

Meanwhile, during the inter-processor communication, the shared memory 508 can reduce latency and can perform high-speed data transmission by assigning at least two queues.

In the drawing, an example is illustrated in which the first manager 734a in the first processor 732a manages a first list 738a which is a whitelist, and the second manager 734b in the second processor 732b manages a second list 738b which is a whitelist, thereby ensuring the real-time transmission of a high-priority event during the inter-processor communication.

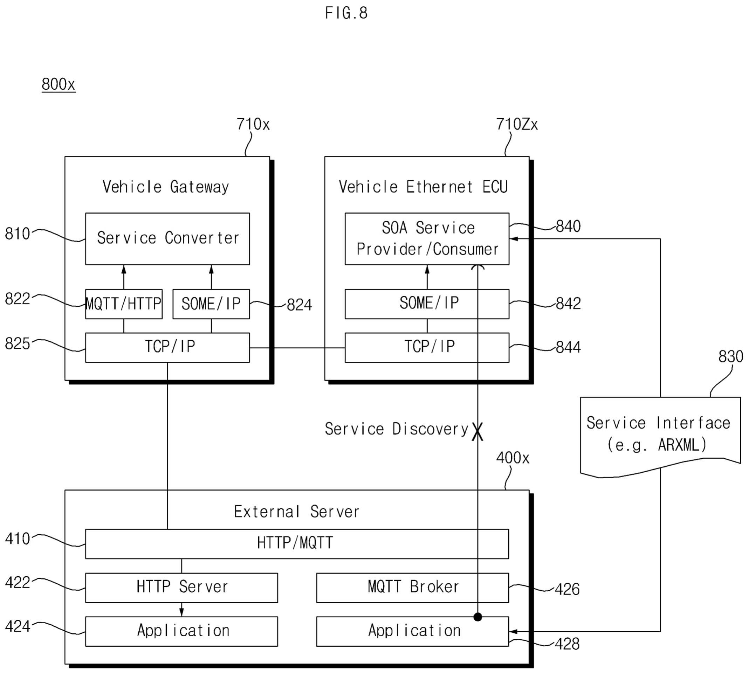

FIG. 8 is an exemplary internal block diagram of a signal processing system for a vehicle associated with the present disclosure.

Referring to FIG. 8, a signal processing system 800x for a vehicle associated with the present disclosure can include a signal processing device 710x configured to operate as a vehicle gateway, and a second signal processing device 710Zx configured to receive and process an in-vehicle sensor signal.

The signal processing device 710x can perform communication with an external server 400x.

The signal processing device 710x can be configured to execute or include TCP/IP interface 825 for communication with the external server 400x, MQTT/HTTP interface 822 for MQTT/HTTP which are external communication protocols from the external server 400x, SOME/IP interface 824 for providing SOME/IP, and a protocol converter 810 configured to perform protocol converting based on a heterogeneous protocol.

Due to a limitation in the SOME/IP protocol operating in a LAN environment, the signal processing device 710x illustrated herein separates the Scalable service-Oriented MiddlewarE over IP (SOME/IP), which is a communication protocol inside a vehicle, from the Message Queueing Telemetry Transport (MQTT) and Hypertext Transfer Protocol (HTTP) which are communication protocols outside a vehicle, and performs protocol converting by using the protocol converter 810.

The second signal processing device 710Zx can be configured to execute or include SOA Service Provider/Consumer 840 for providing SOA Services, SOME/IP interface 842 for providing SOME/IP, and TCP/IP interface 844 for providing TCP/IP.

The TCP/IP interface 844 in the second signal processing device 710Zx can be configured to communicate with the TCP/IP interface 824 in the signal processing device 710x.

An external server 400x can be configured to execute or include HTTP/MQTT interface 410 that communicates with the signal processing device 710x in a vehicle, HTTP server 422 that processes HTTP-based data from the HTTP/MQTT interface 410, a first application 424 that exchanges data with the HTTP server 422, MQTT Broker 426 that processes MQTT-based data from the HTTP/MQTT interface 410, and a second application 428 that exchanges data with the MQTT Broker 426.

In the signal processing system 800X for a vehicle in FIG. 8, the SOME/IP, which is a communication protocol inside the vehicle, is different from the MQTT and HTTP which are communication protocols outside the vehicle, such that the SOA Service Provider/Consumer 840 in the second signal processing device 710Zx cannot support a Service Discovery function, and thus it is difficult to dynamically extend services.

In addition, there is a drawback in that the SOA Application 428 of the external server 400x cannot use a code generated by a service interface 830.

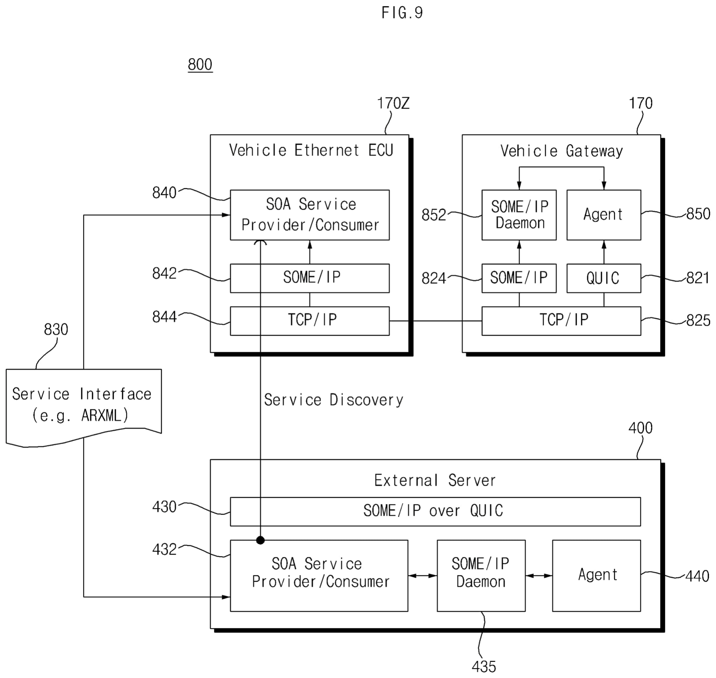

In order to remedy the drawbacks, the present disclosure provides a method of using a separate agent during communication between the vehicle signal processing system and the external server, and provides a communication framework between the inside and outside of the vehicle based on the same protocol by using Packet Forwarding, Sniffing, etc., which will be described below with reference to FIG. 9 and subsequent figures.

FIG. 9 is an exemplary internal block diagram of a signal processing system for a vehicle according to an embodiment of the present disclosure.

Referring to FIG. 9, a signal processing system 800 for a vehicle according to an embodiment of the present disclosure includes a signal processing device 170 configured to operate as a vehicle gateway, and a second signal processing device 170Z configured to receive and process an in-vehicle sensor signal.

Meanwhile, the signal processing device 170 can be a gateway based on High Performance Computing (HPC) of FIG. 2A, and the second signal processing device 170Z can be a zonal gateway disposed in a plurality of zones and configured to receive in-vehicle sensor signals from various sensors and process the sensor signals.

Here, the in-vehicle sensor signal can include at least one of vehicle wheel velocity data, vehicle direction data, vehicle location data (global positioning system (GPS) data), vehicle angle data, vehicle velocity data, vehicle acceleration data, vehicle tilt data, vehicle forward/backward movement data, battery data, fuel data, tire data, vehicle lamp data, in-vehicle temperature data, in-vehicle humidity data, external vehicle camera data, in-vehicle camera data, external vehicle radar data, or external vehicle lidar data.

The signal processing device 170 in the signal processing system 800 for a vehicle according to an embodiment of the present disclosure executes or includes at least one daemon 852 based on a first communication protocol, and an agent 850 configured to exchange a first communication protocol-based packet with the daemon 852 or to exchange a packet with the external server 400.

Accordingly, it is possible to provide a stable communication framework for communication with the external server 400. In addition, it is possible to dynamically extend services by using the same communication protocol as the external server 400.

Meanwhile, the agent 850 can be configured to exchange a packet based on a second communication protocol with a second agent 440 in the external server 400.

Meanwhile, the first communication protocol can be Scalable service-Oriented MiddlewarE over IP (SOME/IP), and the second communication protocol can be TCP/IP.

The agent 850 includes a network manager 1010 (FIG. 10) configured to exchange a packet with the second agent 440 (FIG. 10) in the external server 400, and a packet dispatcher 1020 (FIG. 10) configured to store a packet received from the network manager 1010 or to transmit the packet to the daemon 852.

Accordingly, it is possible to provide a stable communication framework for communication with the external server 400. In addition, it is possible to dynamically extend services by using the same communication protocol as the external server 400. Meanwhile, a code generated by a service interface can be used.

Meanwhile, based on endpoint information in a packet received from the daemon 852, the agent 850 can be configured to store or transmit the packet to the external server 400. Accordingly, it is possible to provide a stable communication framework for communication with the external server 400.

Meanwhile, the agent 850 can stop transmitting the packet if there is no endpoint information in the packet received from the daemon 852. Accordingly, the packet received from the daemon 852 cannot be transmitted to the outside.

Meanwhile, the signal processing device 170 in the vehicle signal processing system 800 according to an embodiment of the present disclosure can further execute or include TCP/IP interface 825 for communication with the external server 400, QUIC interface 821 for providing QUIC, SOME/IP interface 824 for providing SOME/IP.

Meanwhile, the second signal processing device 170Z in the vehicle signal processing system 800 according to an embodiment of the present disclosure can be configured to execute or include SOA Service Provider/Consumer 840 for providing SOA services, SOME/IP interface 842 for providing SOME/IP, and TCP/IP interface 844 for providing TCP/IP.

The external server 400 can be configured to execute or include a second agent 440 for exchanging a packet with the signal processing device 170, QUIC interface 821 for providing QUIC, SOME/IP daemon 435 based on SOME/IP, SOA Service Provider/Consumer 432 for SOA Services, and SOME/IP over QUIC interface 430 for providing SOME/IP based on QUIC.

Meanwhile, the agent 850 in the signal processing device 170 and the second agent 440 in the external server 400 can be SOA-based agents.

In the signal processing system 800 for a vehicle in FIG. 9, the agent 850 in the signal processing device 170 and the second agent 440 in the external server 400 use the same communication protocol, such that an SOA application executed by the signal processing device 170 or the second signal processing device 170Z in the vehicle and an application executed by the external server 400 can be configured to communicate with each other based on the same communication protocol.

Accordingly, a service converter and the like as illustrated in FIG. 8 are not required, and the SOA Service Provider/Consumer 840 in the second signal processing device 170Z can support the Service Discovery function, thereby dynamically extending services.

In addition, the SOA Service Provider/Consumer 432 of the external server 400 can use the code generated by the service interface 830.

Meanwhile, the agent 850 in the signal processing device 170 can perform at least one of sniffing, forwarding, and filtering of the packet received from the daemon 852. Accordingly, the packet can be stably processed.

FIGS. 10 to 14 are diagrams referred to in the description of FIG. 9.

First, FIG. 10 is an exemplary internal block diagram of the agent of FIG. 9.

Referring to FIG. 10, the agent 850 includes a network manager 1010 configured to exchange a packet with the second agent 440 in the external server 400, and a packet dispatcher 1020 configured to store a packet received from the network manager 1010 or to transmit the packet to the daemon 852.

The network manager 110 can provide or manage a protocol function for external communication between the agent 850 and the second agent 440.

The packet dispatcher 1020 can be configured to forward a packet according to a packet forwarding rule.

Accordingly, it is possible to provide a stable communication framework for communication with the external server 400. In addition, it is possible to dynamically extend services by using the same communication protocol as the external server 400. Meanwhile, a code generated by a service interface can be used.

Meanwhile, the network manager 1010 in the agent 850 can be configured to exchange a packet based on a second communication protocol with the second agent 440 in the external server 400.

For example, the packet that is exchanged with the second agent 440 in the external server 400 can be a packet based on the second communication protocol different from the first communication protocol.

Specifically, packet based on the second communication protocol can be an agent packet or a TCP/IP packet, and the packet based on the first communication protocol can be a SOME/IP packet.

Meanwhile, based on endpoint information in packets received from the second agent 440 in the external server 400, the agent 850 can be configured to store at least some of the packets or to transmit the at least some of the packets to the daemon 852. Accordingly, it is possible to provide a stable communication framework for communication with the external server 400.

Meanwhile, the agent 850 can further include a packet filter 1040 configured to filter packets received from the daemon 852, and a packet detector 1030 configured to detect a packet to transmit the external server 400 among the packets from the packet filter 1040.

The packet filter 1040 can filter a packet that can be transmitted to the external server 400, among the packets received from the daemon 852.

The packet dispatcher 1020 can be configured to forward the packet, detected by the packet detector 1030, to the network manager 1010, and the network manager 1010 can be configured to transmit the packet to the second agent 440 in the external server 400. Accordingly, it is possible to provide a stable communication framework for communication with the external server 400.

Meanwhile, the network manager 1010 can be configured to transmit a second packet based on the second communication protocol, including the packet from the packet dispatcher 1020, to the second agent 440 in the external server 400. Accordingly, it is possible to provide a stable communication framework for communication with the external server 400.

Meanwhile, the network manager 1010 in the agent 850 can be configured to receive packet based on the second communication protocol from the second agent 440 in the external server 400, and the packet dispatcher 1020 can process a header and payload in packet based on the second communication protocol, to extract the packet based on the first communication protocol, and can be configured to transmit the extracted packet based on the first communication protocol to the daemon 852. Accordingly, it is possible to provide a stable communication framework for communication with the external server 400.

Meanwhile, the agent 850 can further include a packet encapsulation/decapsulation unit 1052 configured to perform encapsulation or decapsulation of packet based on the second communication protocol, and a manager 1055 configured to dynamically manage configuration and policy information.

Referring to FIG. 10, an application 853 executed by the signal processing device 170 in a vehicle can be configured to transmit the packet based on the first communication protocol to the agent 850 or receive the packet through the daemon 852.

An application 431 executed by the external server 400 can be configured to transmit the packet based on the first communication protocol to the second agent 440 or receive the packet through the daemon 435.

Accordingly, the application 853 executed by the signal processing device 170 in a vehicle can be executed in the external server 400, and the application 431 executed by the external server 400 can be executed in the signal processing device 170 in a vehicle.

Meanwhile, the agent 850 in the signal processing device 170 and the second agent 440 in the external server 400 can be configured to exchange the packet based on the second communication protocol different from the first communication protocol, thereby providing a stable communication framework.

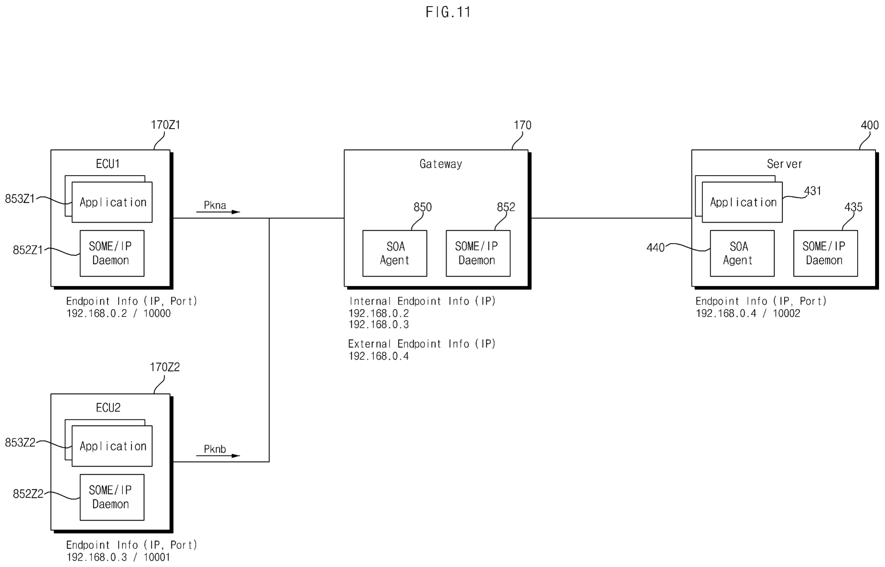

FIG. 11 is a diagram illustrating an example of operation of the signal processing device 170.

Referring to FIG. 11, endpoint information of the agent 850 in the signal processing device 170 can include IP information such as 192.168.0.1, and port information such as 00001.

Endpoint information of the second signal processing device 170Z1, in which an application 852Z1 and a daemon 852Z1 are executed, can include IP information such as 192.168.0.2, and port information such as 10000.

Endpoint information of the third signal processing device 170Z2, in which an application 852Z2 and a daemon 852Z2 are executed, can include IP information such as 192.168.0.3, and port information such as 10001.

Endpoint information of the external server 400, in which an application 431 and a daemon 435 are executed, can include IP information such as 192.168.0.4, and port information such as 10001.

Meanwhile, the agent 850 in the signal processing device 170 can be configured to receive the endpoint information of each of the second signal processing device 170Z1, the third signal processing device 170Z2, and the external server 400, and can be configured to store the received endpoint information.

Further, the agent 850 in the signal processing device 170 can separately manage endpoint information inside a vehicle (hereinafter referred to as internal endpoint information) and endpoint information outside a vehicle (hereinafter referred to as external endpoint information).

In the drawing, an example is illustrated in which the agent 850 in the signal processing device 170 stores 192.168.0.2 and 192.168.0.3, which are the internal endpoint information, separately from 192.168.0.4 which is the external endpoint information.

Meanwhile, the agent 850 in the signal processing device 170 can share the internal endpoint information and the external endpoint information with the second signal processing device 170Z1, the third signal processing device 170Z2, and the external server 400.

Meanwhile, the agent 850 in the signal processing device 170 can be configured to receive a first communication protocol-based packet, including information related to service and endpoint information, from the second signal processing device 170Z1 or the third signal processing device 170Z2, and can be configured to store the received packet or to transmit the packet to the second signal processing device 170Z1 or the third signal processing device 170Z2 which is another signal processing device or to transmit the packet to the external server 400, based on the endpoint information.

Meanwhile, the agent 850 in the signal processing device 170 can be configured to receive a first communication protocol-based packet Pkna, including fuel efficiency measurement information and endpoint information, from the second signal processing device 170Z1, and can be configured to store the received packet or to transmit the packet to another signal processing device or the external server 400 requesting subscription to the fuel efficiency measurement information, based on the endpoint information. Accordingly, it is possible to dynamically extend services.

Meanwhile, the agent 850 in the signal processing device 170 can be configured to receive a SOME/IP SD packet based on the first communication protocol, including fuel efficiency measurement information and endpoint information, from the second signal processing device 170Z1.

For example, in the case in which the third signal processing device 170Z2 subscribes to the fuel efficiency measurement information from the second signal processing device 170Z1, the second signal processing device 170Z1 can be configured to output the fuel efficiency measurement information and the endpoint information including IP information of 192.168.0.3, and the agent 850 in the signal processing device 170 can be configured to transmit the fuel efficiency measurement information to the third signal processing device 170Z2 based on the endpoint information. Accordingly, the third signal processing device 170Z2 can be configured to receive the fuel efficiency measurement information through the agent 850 in the signal processing device 170.

In another example, in the case in which the external server 400 subscribes to the fuel efficiency measurement information from the second signal processing device 170Z1, the second signal processing device 170Z1 can be configured to output the fuel efficiency measurement information and the endpoint information including IP information of 192.168.0.4, and the agent 850 in the signal processing device 170 can be configured to transmit the fuel efficiency measurement information to the external server 400 based on the endpoint information. Accordingly, the external server 400 can be configured to receive the fuel efficiency measurement information through the agent 850 in the signal processing device 170.

In yet another example, in the case in which the endpoint information output from the second signal processing device 170Z1 includes IP information of 192.168.0.1 as target endpoint information, the agent 850 in the signal processing device 170 can be configured to store the fuel efficiency measurement information therein.

Meanwhile, the agent 850 can be configured to receive a first communication protocol-based packet, including information related to service and endpoint information, from each of the plurality of signal processing devices 170Z1 and 170Z2, and can be configured to store or transmit the packet to another signal processing device or the external server 400 requesting service subscription, based on the information related to service and the endpoint information. Accordingly, it is possible to provide a stable communication framework for communication with the external server 400. In addition, it is possible to dynamically extend services by using the same communication protocol as the external server 400.

For example, in the case in which the endpoint information output from the second signal processing device 170Z1 includes IP information of 192.168.0.3 and 192.168.0.4 as target endpoint information, the agent 850 in the signal processing device 170 to the third signal processing device 170Z2 and the external server 400.

Meanwhile, the agent 850 in the signal processing device 170 can be configured to receive a first communication protocol-based packet Pknb, including vehicle location information or vehicle status information and endpoint information, from the third signal processing device 170Z2, and can be configured to store the received packet or to transmit the packet to another signal processing device or the external server 400 requesting subscription to the vehicle location information or vehicle status information, based on the endpoint information. Accordingly, it is possible to dynamically extend services.

Meanwhile, the agent 850 in the signal processing device 170 can be configured to receive a SOME/IP SD packet based on the first communication protocol, including vehicle location information or vehicle status information and endpoint information, from the third signal processing device 170Z2.

For example, in the case in which the second signal processing device 170Z1 subscribes to the vehicle location information or vehicle status information from the third signal processing device 170Z2, the third signal processing device 170Z2 can be configured to output the vehicle location information or vehicle status information and endpoint information including IP information of 192.168.0.2, and the agent 850 in the signal processing device 170 can be configured to transmit the vehicle location information or vehicle status information to the second signal processing device 170Z1 based on the endpoint information. Accordingly, the second signal processing device 170Z1 can receive the vehicle location information or vehicle status information through the agent 850 in the signal processing device 170.

In another example, in the case in which the external server 400 subscribes to the vehicle location information or vehicle status information from the third signal processing device 170Z2, the third signal processing device 170Z2 can be configured to output the vehicle location information or vehicle status information and endpoint information including IP information of 192.168.0.4, and the agent 850 in the signal processing device 170 can be configured to transmit the vehicle location information or vehicle status information to the external server 400 based on the endpoint information. Accordingly, the external server 400 can be configured to receive the vehicle location information or vehicle status information through the agent 850 in the signal processing device 170.

In yet another example, in the case in which the endpoint information output from the third signal processing device 170Z2 includes IP information of 192.168.0.1 as target endpoint information, the agent 850 in the signal processing device 170 can be configured to store the vehicle location information or vehicle status information.

In yet another example, in the case in which the endpoint information output from the third signal processing device 170Z2 includes IP information of 192.168.0.2 and 192.168.0.4 as target endpoint information, the agent 850 in the signal processing device 170 can be configured to transmit the vehicle location information or vehicle status information to the second signal processing device 170Z1 and the external server 400.

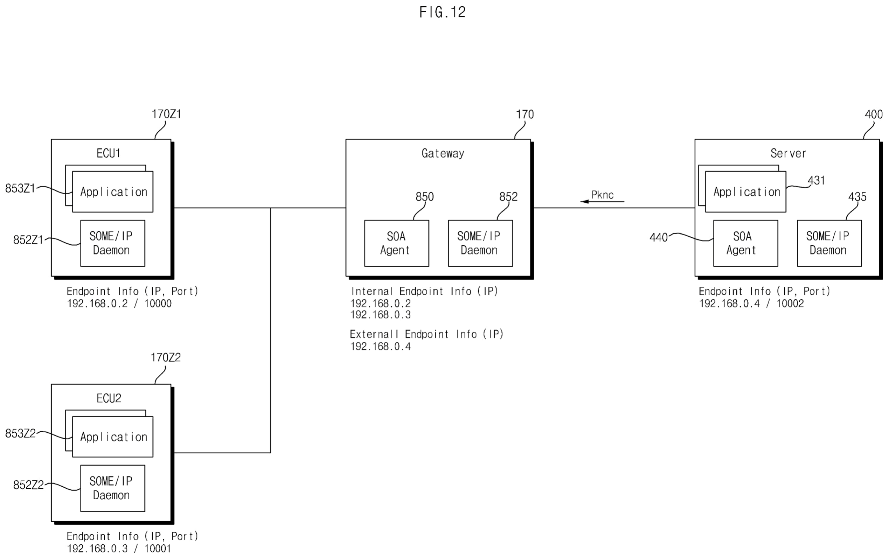

FIG. 12 is a diagram illustrating another example of operation of the signal processing device 170.

Referring to FIG. 12, the agent 850 in the signal processing device 170 can be configured to receive a packet based on a second communication protocol Pknc, including door lock information or door unlock information, from the external server 400, and can extract a first communication protocol-based packet, including the door lock information or door unlock information, from packet based on the second communication protocol and store the extracted packet based on the first communication protocol or to transmit the packet to another signal processing device requesting service subscription.

Meanwhile, the agent 850 in the signal processing device 170 can be configured to receive an agent packet based on the second communication protocol, including the door lock information or door unlock information and the endpoint information.

The agent 850 in the signal processing device 170 can separate the header and payload from the agent packet to extract SOME/IP SD packet based on the first communication protocol.

For example, in the case in which the second signal processing device 170Z1 subscribes to the door lock information or door unlock information from the external server 400, the external server 400 can be configured to output the door lock information or door unlock information and endpoint information including IP information of 192.168.0.2, and the agent 850 in the signal processing device 170 can be configured to transmit the door lock information or door unlock information to the second signal processing device 170Z1 based on the endpoint information. Accordingly, the second signal processing device 170Z1 can receive the door lock information or door unlock information through the agent 850 in the signal processing device 170.

In another example, in the case in which the third signal processing device 170Z2 subscribes to the door lock information or door unlock information from the external server 400, the external server 400 can be configured to output the door lock information or door unlock information and endpoint information including IP information of 192.168.0.3, and the agent 850 in the signal processing device 170 can be configured to transmit the door lock information or door unlock information to the third signal processing device 170Z2 based on the endpoint information. Accordingly, the third signal processing device 170Z2 can be configured to receive the door lock information or door unlock information through the agent 850 in the signal processing device 170.

In yet another example, in the case in which the endpoint information output from the external server 400 includes IP information of 192.168.0.1 as target endpoint information, the agent 850 in the signal processing device 170 can be configured to store the door lock information or door unlock information.

In yet another example, in the case in which the endpoint information output from the external server 400 includes IP information of 192.168.0.2 and 192.168.0.3 as target endpoint information, the agent 850 in the signal processing device 170 can be configured to transmit the door lock information or door unlock information to the second signal processing device 170Z1 and the third signal processing device 170Z2.

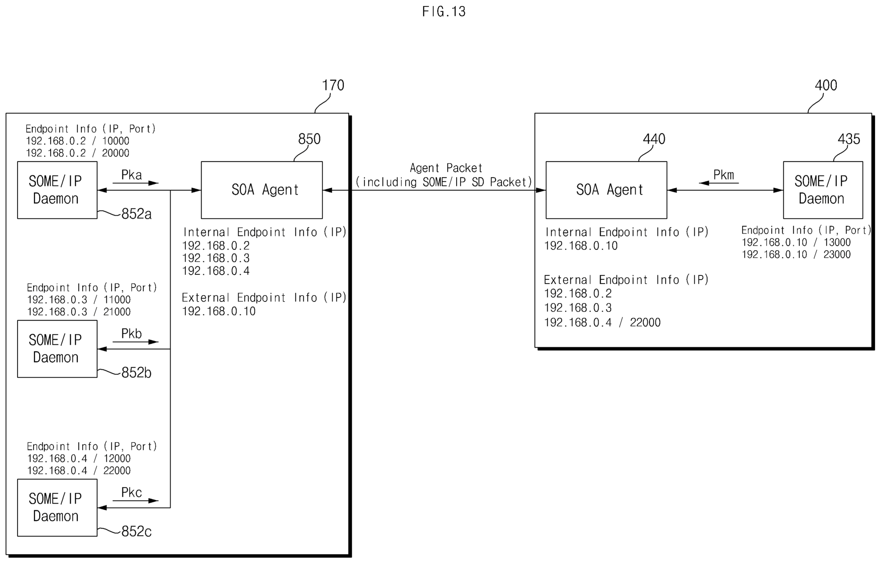

FIG. 13 is a diagram illustrating yet another example of operation of the signal processing device 170.

Referring to FIG. 13, the signal processing device 170 can include a plurality of daemons 852a, 852b, and 852c, and an agent 850.

Meanwhile, endpoint information can be allocated to each of the plurality of daemons 852a, 852b, and 852c in the signal processing device 170.

For example, endpoint information, including IP information such as 192.168.0.2 and port information such as 10000 or 20000, can be allocated to a first daemon 852a among the plurality of daemons 852a, 852b, and 852c.

Meanwhile, endpoint information, including IP information such as 192.168.0.3 and port information such as 11000 or 21000, can be allocated to a second daemon 852b among the plurality of daemons 852a, 852b, and 852c.

Meanwhile, endpoint information, including IP information such as 192.168.0.4 and port information such as 12000 or 22000, can be allocated to a third daemon 852c among the plurality of daemons 852a, 852b, and 852c.

Meanwhile, endpoint information, including IP information such as 192.168.0.10 and port information such as 13000 or 23000, can be allocated to a daemon 435 in the external server 400.

Meanwhile, the agent 850 in the signal processing device 170 can be configured to receive and store the endpoint information of each of the plurality of daemons 852a, 852b, and 852c and the external server 400.

Further, the agent 850 in the signal processing device 170 can separately manage internal endpoint information and external endpoint information.

In the drawing, an example is illustrated in which the agent 850 in the signal processing device 170 stores 192.168.0.2, 192.168.0.3, and 192.168.0.4, which are the internal endpoint information, separately from 192.168.0.10 which is the external endpoint information.

Meanwhile, the agent 850 in the signal processing device 170 can be configured to share the internal endpoint information and the external endpoint information with each of the plurality of daemons 852a, 852b, and 852c and the external server 400.

Meanwhile, the agent 850 in the signal processing device 170 can be configured to receive a first communication protocol-based packet, including information related to service and endpoint information, from at least one of the plurality of daemons 852a, 852b, and 852c, and to store the received packet or to transmit the packet to another daemon or the external server 400 based on the endpoint information.

That is, as illustrated in FIG. 11, the agent 850 in the signal processing device 170 can be configured to transmit the fuel efficiency measurement information or the vehicle location information or the vehicle status information to the daemon or the external server 400 requesting subscription to the information.

Meanwhile, as illustrated in FIG. 12, the agent 850 in the signal processing device 170 can be configured to transmit the door lock information or the door unlock information to the daemon or the external server 400 requesting subscription to the information.

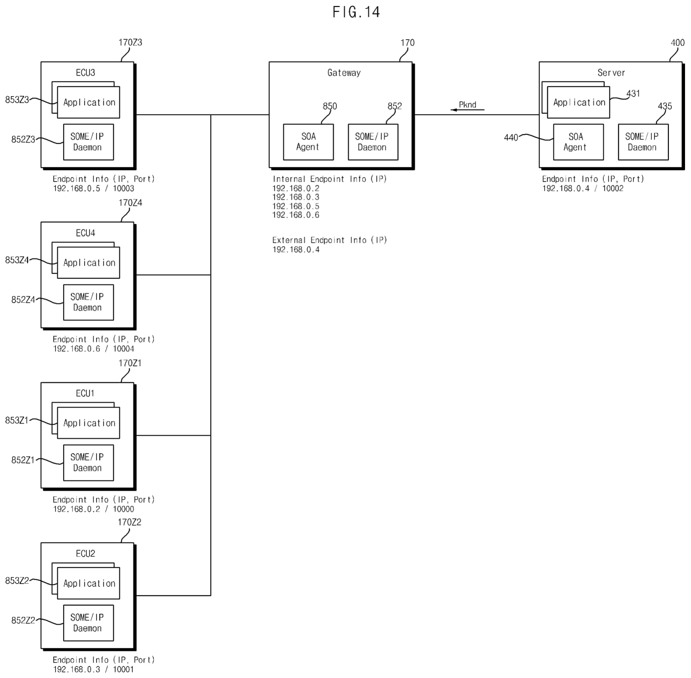

FIG. 14 is a diagram illustrating yet another example of operation of the signal processing device 170.

Referring to FIG. 14, the agent 850 can perform communication with a plurality of signal processing devices 170Z1 to 170Z4 and the external server 400.

Meanwhile, endpoint information can be allocated to each of the plurality of signal processing devices 170Z1 to 170Z4 in the signal processing device 170.

For example, endpoint information, including IP information such as 192.168.0.2 and port information such as 10000, can be allocated to a first signal processing device 170Z1 among the plurality of signal processing devices 170Z1 to 170Z4.

Meanwhile, endpoint information, including IP information such as 192.168.0.3 and port information such as 10001, can be allocated to a second signal processing device 170Z2 among the plurality of signal processing devices 170Z1 to 170Z4.

Meanwhile, endpoint information, including IP information such as 192.168.0.5 and port information such as 10003, can be allocated to a third signal processing device 170Z3 among the plurality of signal processing devices 170Z1 to 170Z4.

Meanwhile, endpoint information, including IP information such as 192.168.0.6 and port information such as 10004, can be allocated to a fourth signal processing device 170Z4 among the plurality of signal processing devices 170Z1 to 170Z4.

Meanwhile, endpoint information, including IP information such as 192.168.0.4 and port information such as 10002, can be allocated to the external server 400.

Meanwhile, the agent 850 in the signal processing device 170 can be configured to receive and store the endpoint information of each of the plurality of signal processing devices 170Z1 to 170Z4 and the external server 400.

Further, the agent 850 in the signal processing device 170 can separately manage internal endpoint information and external endpoint information.

In the drawing, an example is illustrated in which the agent 850 in the signal processing device 170 stores 192.168.0.2, 192.168.0.3, 192.168.0.5, and 192.168.0.6, which are the internal endpoint information, separately from 192.168.0.4 which is the external endpoint information.

Meanwhile, the agent 850 in the signal processing device 170 can be configured to share the internal endpoint information and the external endpoint information with each of the plurality of signal processing devices 170Z1 to 170Z4 and the external server 400.

Meanwhile, the agent 850 in the signal processing device 170 can be configured to receive a first communication protocol-based packet, including information related to service and endpoint information, from at least one of the plurality of signal processing devices 170Z1 to 170Z4, and to store the received packet or to transmit the packet to another signal processing device or the external server 400 based on the endpoint information.

That is, as illustrated in FIG. 11, the agent 850 in the signal processing device 170 can be configured to transmit the fuel efficiency measurement information or the vehicle location information or the vehicle status information to the signal processing device or the external server 400 requesting subscription to the information.

Meanwhile, as illustrated in FIG. 12, the agent 850 in the signal processing device 170 can be configured to transmit the door lock information or the door unlock information to the signal processing device or the external server 400 requesting subscription to the information.

It will be apparent that, although the preferred embodiments have been shown and described above, the present disclosure is not limited to the above-described specific embodiments, and various modifications and variations can be made by those skilled in the art without departing from the gist of the appended claims. Thus, it is intended that the modifications and variations should not be understood independently of the technical spirit or prospect of the present disclosure.

## Claims

1. A signal processing device configured to execute at least one daemon based on a first communication protocol and execute an agent configured to exchange a packet based on the first communication protocol with the daemon or exchange a packet with an external server,
wherein the agent comprises:
a network manager configured to exchange a packet with a second agent in the external server; and
a packet dispatcher configured to store a packet received from the network manager or to transmit the packet to the daemon.

2. The signal processing device of claim 1, wherein the network manager in the agent is configured to exchange a packet based on a second communication protocol with the second agent in the external server.

3. The signal processing device of claim 1, wherein based on endpoint information in a packet received from the daemon, the agent is configured to store or transmit the packet to the external server.

4. The signal processing device of claim 1, wherein in response to there being no endpoint information in the packet received from the daemon, the agent is configured to stop transmitting the packet.

5. The signal processing device of claim 1, wherein based on endpoint information in packets received from the second agent in the external server, the agent is configured to store at least some of the packets or to transmit the at least some of the packets to the daemon.

6. The signal processing device of claim 1, wherein the agent comprises:
a packet filter configured to filter a packet received from the daemon; and
a packet detector configured to detect a packet to transmit the external server, among packets from the packet filter,
wherein the packet dispatcher is configured to forward the packet, detected by the packet detector, to the network manager, and
wherein the network manager is configured to transmit the packet to the second agent in the external server.

7. The signal processing device of claim 6, wherein the network manager is configured to transmit a second packet based on a second communication protocol, including the packet from the packet dispatcher, to the second agent in the external server.

8. The signal processing device of claim 1, wherein the network manager in the agent is configured to receive packet based on the second communication protocol from the second agent in the external server,
wherein the packet dispatcher is configured to process a header and payload in packet based on the second communication protocol, to extract the packet based on the first communication protocol, and to transmit the extracted packet based on the first communication protocol to the daemon.

9. The signal processing device of claim 1, wherein the agent is configured to perform at least one of sniffing, forwarding, and filtering of the packet received from the daemon.

10. The signal processing device of claim 1, wherein the agent is configured to receive the packet based on the first communication protocol, including information related to service and endpoint information, from a second signal processing device, and to store the received packet or to transmit the packet to a third signal processing device or the external server based on the endpoint information.

11. The signal processing device of claim 1, wherein the agent is configured to receive the packet based on the first communication protocol, including fuel efficiency measurement information and endpoint information, from the second signal processing device, and to store the received packet or to transmit the fuel efficiency measurement information to another signal processing device or the external server requesting subscription, based on the endpoint information.

12. The signal processing device of claim 1, wherein the agent is configured to receive the packet based on the first communication protocol, including vehicle location information or vehicle status information and endpoint information, from the second signal processing device, and to store the received packet or to transmit the vehicle location information or vehicle status information to another signal processing device or the external server requesting subscription, based on the endpoint information.

13. The signal processing device of claim 1, wherein the agent is configured to receive the packet based on the first communication protocol, including information related to service and endpoint information, from each of a plurality of signal processing devices, and to store the received packet or to transmit the packet to another signal processing device or the external server requesting service subscription, based on the information related to service and the endpoint information.

14. The signal processing device of claim 1, wherein the agent is configured to receive a packet based on a second communication protocol, including door lock information or door unlock information, from the external server, and to extract the packet based on the first communication protocol, including the door lock information or door unlock information, from packet based on the second communication protocol, and to store the extracted packet based on the first communication protocol or to transmit the packet to another signal processing device requesting service subscription.

15. The signal processing device of claim 2, wherein the first communication protocol is Scalable service-Oriented MiddlewarE over IP (SOME/IP), and the second communication protocol is TCP/IP.

16. A signal processing device configured to execute at least one daemon based on a first communication protocol and execute an agent configured to exchange a packet based on the first communication protocol with the daemon or exchange a packet with an external server,
wherein the agent is configured to exchange a packet based on a second communication protocol with a second agent in the external server, and to store or transmit the packet to the external server, based on endpoint information in the packet received from the daemon.

17. The signal processing device of claim 15, wherein in response to there being no endpoint information in the packet received from the daemon, the agent is configured to stop transmitting the packet.

18. The signal processing device of claim 1, wherein based on endpoint information in packets received from the second agent in the external server, the agent is configured to store at least some of the packets or to transmit the at least some of the packets to the daemon.

19. A vehicle comprising the signal processing device of any one of claims 1 to 18.
